Europäisches Patentamt

European Patent Office

Office européen des brevets

(11) Veröffentlichungsnummer : **0 174 293
B1**

## (12) EUROPÄISCHE PATENTSCHRIFT

(45) Veröffentlichungstag der Patentschrift :
23.03.88

(21) Anmeldenummer : 85890201.8

(22) Anmeldetag : 02.09.85

(51) Int. Cl.⁴ : **C 21 B 3/08**, C 10 B 39/12, C 22 B 1/26

(54) Vorrichtung zur Gewinnung der fühlbaren Wärme von schüttfähigem Heissgut.

(30) Priorität : 06.09.84 AT 2857/84

(43) Veröffentlichungstag der Anmeldung :
12.03.86 Patentblatt 86/11

(45) Bekanntmachung des Hinweises auf die Patenterteilung : 23.03.88 Patentblatt 88/12

(84) Benannte Vertragsstaaten :
BE DE FR GB IT LU NL SE

(56) Entgegenhaltungen :
DE-A- 1 508 039
DE-B- 1 253 669
DE-C-   902 130
PATENT ABSTRACTS OF JAPAN, unexamined applications, Sektion M, Band 2, Nr. 18, 7. Februar 1978
THE PATENT OFFICE JAPANESE GOVERNMENT
Seite 7114 M 77

(73) Patentinhaber : VOEST-ALPINE Aktiengesellschaft
Muldenstrasse 5
A-4020 Linz (AT)

(72) Erfinder : Der Erfinder hat auf seine Nennung verzichtet

(74) Vertreter : Wolfram, Gustav, Dipl.-Ing.
Schwindgasse 7 P.O. Box 205
A-1041 Wien (AT)

## Beschreibung

Die Erfindung betrifft eine Vorrichtung zur Gewinnung der fühlbaren Wärme von schüttfähigem Heißgut, insbesondere flüssiger Hochofenschlacke oder ungelöschtem Koks, mit einem über mindestens zwei Umlenkräder geführten, aus gelenkig verbundenen Platten gebildeten endlosen Förderband, wobei das Obertrum des Förderbandes mit dem auf ihm aufgebrachten Heißgut und das leere Untertrum durch je eine Kühlzone geführt sind.

Eine Vorrichtung dieser Art ist aus der JP-OS 52-132454 bekannt. Die Platten des Förderbandes, die zur Aufnahme des Heißgutes trogförmig ausgebildet sind, werden zur Schonung der Anlage vor Aufbringen des Heißgutes mit einem Bettbedeckungsmaterial beschüttet, wonach auf das Bettbedeckungsmaterial das Heißgut aufgebracht wird. Das Aufbringen von eigenem Bettbedeckungsmaterial erfordert neben einem verfahrenstechnisch zusätzlichen Aufwand auch einen zusätzlichen maschinenbaulichen Aufwand, denn es muß eine eigene Beschickungsstation für das Bettbedeckungsmaterial vorgesehen werden.

Weiters ist es erforderlich, die Höhe und Gleichmäßigkeit des Bettbedeckungsmaterials nach dessen Aufbringen vor Aufgabe des Heißgutes zu kontrollieren, damit auch tatsächlich keine Beschädigungen des Förderbandes durch das Heißgut auftreten. Das Bettbedeckungsmaterial bewirkt ein Absinken des Temperaturniveaus des Heißgutes und der Platten des Förderbandes, womit der Wert der rückgewonnenen Wärme vermindert wird.

Die Erfindung bezweckt die Vermeidung dieser Nachteile und Schwierigkeiten und stellt sich die Aufgabe, eine Vorrichtung der eingangs beschriebenen Art zu schaffen, bei der die fühlbare Wärme des Heißgutes in größtmöglichem Ausmaß und mit hohem Wirkungsgrad rückgewonnen werden kann, wobei man ohne Bettbedeckungsmaterial das Auslangen findet.

Diese Aufgabe wird erfindungsgemäß dadurch gelöst, daß die Platten des Förderbandes zumindest doppellagig ausgebildet sind und eine außenliegende, das Heißgut aufnehmende Trägerschicht sowie eine innenliegende Isolierschicht aufweisen.

Bei der Vorrichtung gemäß der JP-OS 52-132454 wird das am Obertrum liegende Heißgut und das Untertrum des Förderbandes mit Luft gekühlt, die mittels eines Ventilators durch die beiden Kühlzonen gefördert wird. Das Temperaturniveau der gewonnenen Wärme ist dadurch nicht sehr hoch, und es sind große Ventilatorleistungen, Wärmetauscherflächen, Filterlagen etc. notwendig.

Zur Vermeidung dieses Nachteiles ist gemäß einer bevorzugten Ausführungsform erfindungsgemäß vorgesehen, daß die Trägerschichten als Speicherplatten ausgebildet sind, wobei zweckmäßig entlang des Untertrums eine mit den Speicherplatten in Kontakt stehende Kühleinrichtung angeordnet ist, die von einem vorzugsweise in einem thermodynamischen Kreisprozeß geführten Kühlmedium durchströmt ist. Die Speicherplatten werden somit durch reine Wärmeleitung rückgekühlt, u. zw. ohne jedes Zwischenmedium, wodurch eine besonders wirkungsvolle Wärmerückgewinnung ermöglicht ist.

Anstelle einer Berührung der Speicherplatten mit der Kühleinrichtung sind gemäß einer anderen bevorzugten Ausführungsform entlang des Untertrums kühlmitteldurchflossene Kühlplatten vorgesehen, die in geringem Abstand unterhalb des Untertrums angeordnet sind, wobei die Rückkühlung der Speicherplatten ebenfalls ohne jedes Zwischenmedium erfolgt, u. zw. durch Strahlung.

Eine weitere bevorzugte Ausführungsform ist dadurch gekennzeichnet, daß die Platten an aneinander angelenkten Kettengliedern befestigt sind, wobei zweckmäßig die Platten mittels an den Kettengliedern angeordneter Führungsrollen entlang von Führungsschienen geführt sind.

Vorzugsweise ist die Kühleinrichtung von hintereinander angeordneten hohlen Kühlplatten gebildet, wobei die Oberseiten der Kühlplatten als glatte, mit den Platten des Förderbandes in Kontakt gelangende Gleitflächen ausgebildet sind.

Um einen guten Kontakt der Kühlplatten mit den Speicherplatten zu sichern, sind vorteilhaft die Kühlplatten am Fundament federnd abgestützt.

Eine besonders einfache Gestaltung der Isolierschicht ist dadurch gekennzeichnet, daß die Isolierschicht als starrer Gitterrost ausgebildet ist.

Zweckmäßig sind die Trägerschichten und die Isolierschichten auf jeweils einem in sich starren Unterbau, der vorzugsweise als hohler Kasten ausgebildet ist, befestigt, wobei zwecks Zulassung einer ungehinderten temperaturbedingten Dehnung der Platten die Befestigung der Trägerschichten und Isolierschichten auf dem Unterbau mittels federnd vorgespannter schwenkbarer Schrauben erfolgt.

Um ein dichtes Aneinanderliegen der Platten des Förderbandes bei der Aufgabestation des Heißgutes zu erzielen, ist vorteilhaft das Obertrum zumindest bei der Aufgabestation des Schüttgutes entlang einer konkaven, nach unten gewölbten Führung geführt.

Ein Aneinanderpressen der Platten kann nach einer weiteren Ausführungsform dadurch bewerkstelligt werden, daß die Verbindung der Platten mittels in Langlöchern geführter federbelasteter Bolzen, durch die benachbarte Platten in eine aneinandergepreßte Position geführt sind, gebildet ist.

Um ein Zurückfließen des auf das Förderband aufgebrachten Heißgutes vor seiner Erstarrung zu vermindern, ist zweckmäßig das Obertrum an der Aufgabestation des Heißgutes leicht abfallend und erst daran anschließend steigend geführt.

Vorteilhaft ist das der Aufgabestation für das Heißgut benachbarte Umlenkrad angetrieben, wodurch die Platten des Förderbandes am Obertrum geschoben werden und dicht aneinanderliegen.

Zweckmäßig ist die Kühleinrichtung des Untertrums mit mindestens einer als Wärmetauscher ausgebildeten und in der Kühlzone des Obertrums angeordneten Kühleinrichtung in Serie geschaltet.

Um im Bereich des nicht angetriebenen Umlenkrades ein Eindringen von körnigem Heißgut zwischen zwei Platten des Förderbandes zu vermeiden, ist bevorzugt an der Unterseite der Speicherplatte eine die Fuge zur benachbarten Platte überbrückende und unter die Speicherplatte der benachbarten Platte reichende Deckleiste angeordnet.

Zur Verwendung der Vorrichtung für Heißgut, welches unter Vermeidung von Luftzutritt gekühlt werden muß (beispielsweise beim Trockenlöschen von Koks), ist zweckmäßig die Kühlzone des Obertrums mit einer Labyrinthdichtung gegenüber dem Förderband gedichtet und weist eine Speiseleitung für die Zufuhr von Inertgas in die Kühlzone auf.

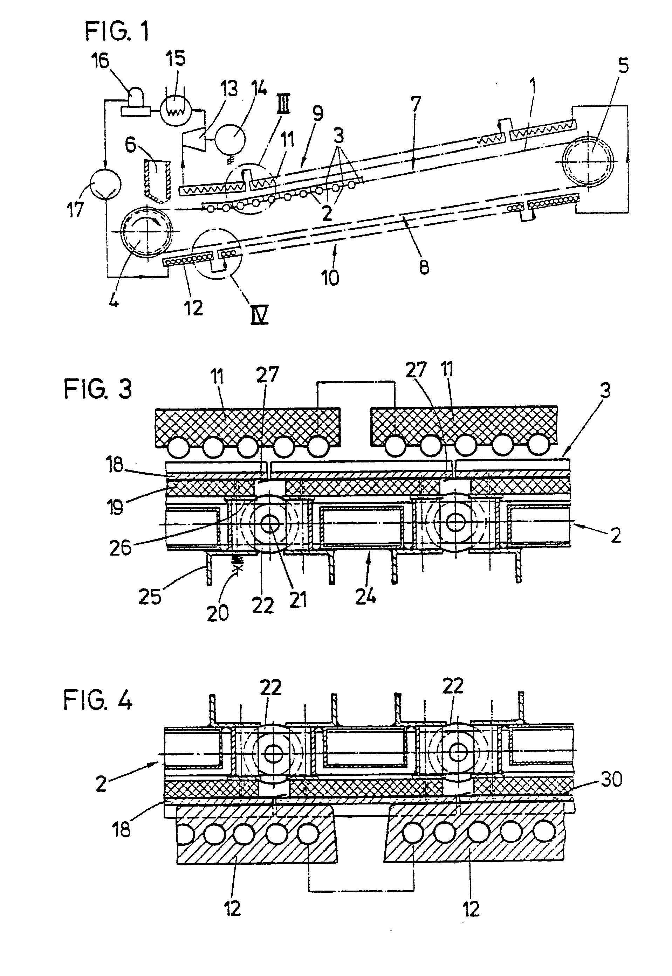

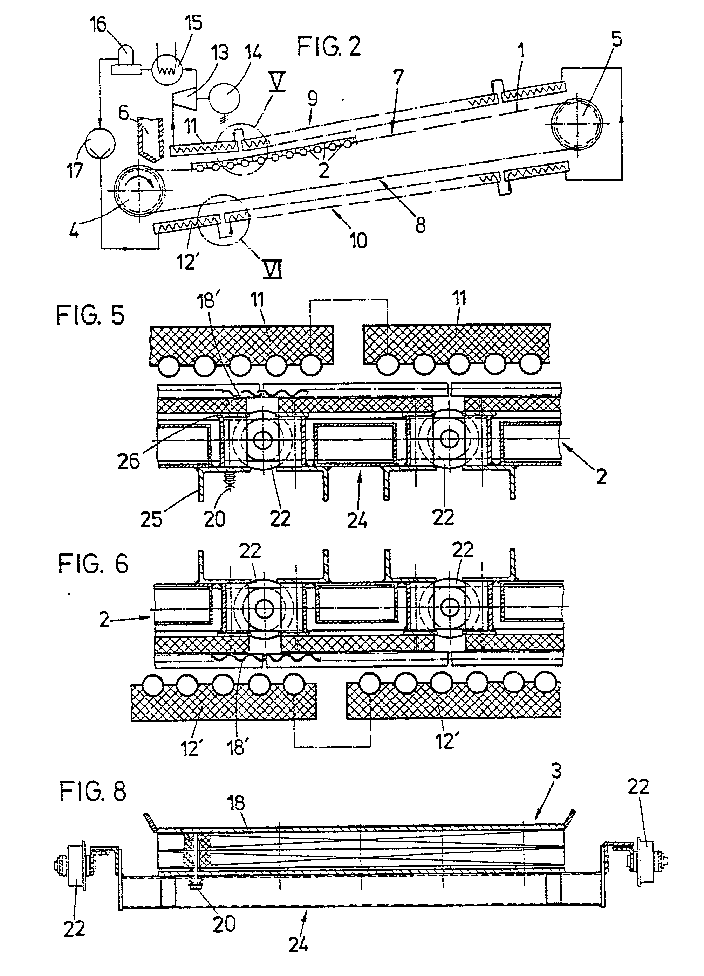

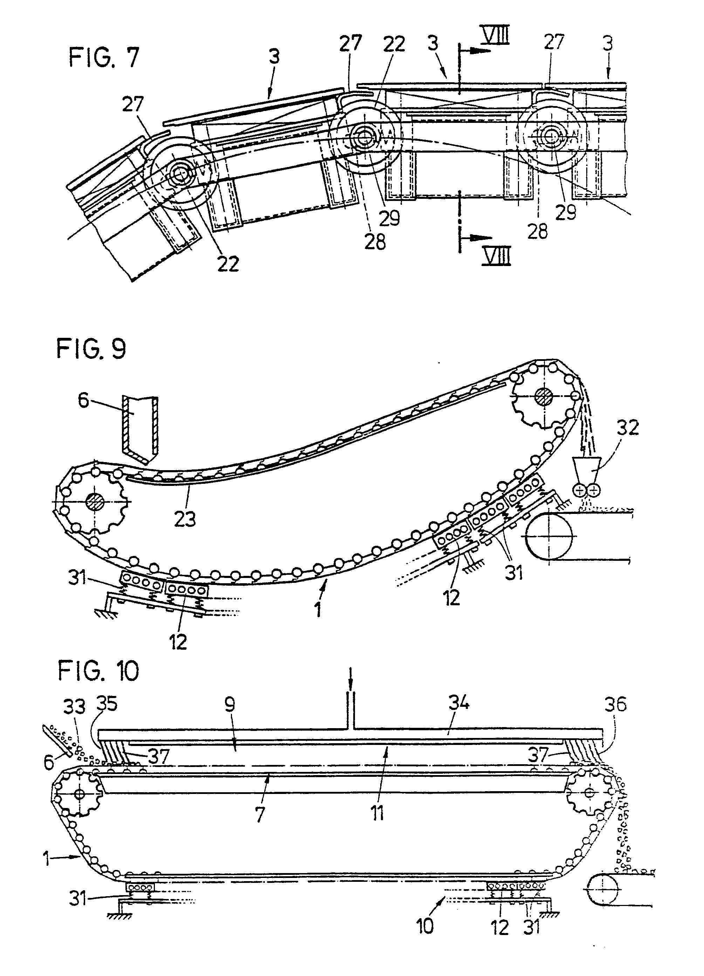

Die Erfindung ist nachfolgend anhand mehrerer Ausführungsbeispiele näher erläutert, wobei die Fig. 1 und 2 in schematischer Darstellung zwei unterschiedliche Ausführungsformen zeigen. Die Fig. 3 und 4 zeigen Details III und IV der Fig. 1 in vergrößertem Maßstab. Die Fig. 5 und 6 zeigen Details V und VI der Fig. 2, ebenfalls in vergrößertem Maßstab. In den Fig. 7 und 8 ist die konstruktive Ausbildung der Platten des Förderbandes näher dargestellt, wobei Fig. 7 eine Seitenansicht analog zu den Fig. 1 und 2 und Fig. 8 einen Querschnitt entlang der Linie VIII-VIII der Fig. 7 veranschaulichen. Die Fig. 9 und 10 zeigen in zu den Fig. 1 und 2 analoger Darstellung weitere Ausführungsformen.

Gemäß Fig. 1 ist ein endloses Förderband 1 von aneinander angelenkten Kettenelementen bzw. Kettengliedern 2 gebildet, an denen im Querschnitt trogförmige Platten 3 befestigt sind. Das Förderband ist um zwei Umlenkräder 4, 5 geführt, von denen eines, u. zw. das näher bei der Aufgabestation 6 des Heißgutes angeordnete 4, angetrieben ist. Sowohl das Obertrum 7 als auch das Untertrum 8 des Förderbandes sind durch Kühlzonen 9 und 10 geführt, in denen jeweils von Kühlmittel durchströmte, hintereinander geschaltete Kühleinrichtungen 11, 12 angeordnet sind.

Das Kühlmedium, vorzugsweise Wasser, welches zunächst während des Durchströmens der Kühlzone 10 des Untertrums 8 erwärmt wird, fließt anschließend durch die Kühlzone 9 des Obertrums 7 und wird in einem thermodynamischen Kreisprozeß geführt. Der nach Durchströmen der Kühlzone 9 des Obertrums 7 aus dem Kühlmedium entstandene Dampf wird einer Turbine 13 zugeleitet, die einen Generator 14 treibt. Von der Turbine 13 wird der entspannte Dampf in einen Kondensator 15 geführt. Das aus dem Kondensator austretende Kühlmittel gelangt in einen Speisewasserbehälter 16 mit Entgaser. Mittels einer Pumpe 17 wird das Wasser vom Speisewasserbehälter 16 wieder der Kühlzone 10 des Untertrums 8 zugeleitet.

Der Aufbau der das Heißgut aufnehmenden Platten 3 ist den Fig. 3, 7 und 8 zu entnehmen. Die Platten 3 sind doppellagig ausgebildet und werden von einer oberen, mit dem Heißgut in direkten Kontakt gelangenden Trägerschicht 18, die gemäß Fig. 3 als vorzugsweise 10 bis 20 mm dicke Speicherplatte ausgebildet ist, und einer darunterliegenden Isolierschicht 19 gebildet. Trägerschicht 18 und Isolierschicht 19 sind mittels federnd vorgespannter und zwecks Zulassung einer durch Temperaturunterschiede bedingten Dehnung schwenkbarer Spannschrauben 20 auf einem Unterbau der Kettenglieder 2 befestigt, so daß die Platte trotz Wärmedehnung und thermischer Spannungen auch nach längerer Betriebszeit möglichst verzugsfrei und plan bleibt. Zur Verminderung thermischer Spannungen in der Trägerschicht 18 wird diese vorzugsweise mit nicht näher gezeigten runden Nuten versehen. Die Isolierschicht 19 ist vorteilhaft als ein- oder mehrlagiger starrer Gitterrost ausgebildet.

An den Gelenkstellen 21 der Kettenglieder sind Führungsrollen 22 gelagert, durch welche das Förderband 1 entlang von am Obertrum 7 und am Untertrum 8 angeordneten Führungsschienen 23 (dargestellt in Fig. 9) geführt ist. Der Unterbau jedes Kettengliedes 2 weist einen hohlen Kasten 24 auf, an dem Winkeleisen 25 und Flacheisen 26 zur Bildung einer Abstützung der Speicherplatte 18 auf dem Kasten 24 angeschweißt sind. Die Führungsrollen 22 befinden sich an beiden Seiten des Plattenbandes außerhalb der heißen Zone.

Um ein Eindringen von Heißgut zwischen zwei benachbarten Speicherplatten 18 zu verhindern, weist eine der beiden benachbarten Speicherplatten 18 eine bis unter die anschließende Speicherplatte 18 ragende Deckleiste 27 auf. Da das bei der Aufgabestation 6 angeordnete Umlenkrad 4 angetrieben ist, werden die Kettenglieder 2 und damit die Platten 3 und Speicherplatten 18 entlang des Obertrums 7 geschoben, wodurch ein einen Spalt zwischen benachbarten Speicherplatten verursachendes und eventuell vorhandenes Lagerspiel an den Gelenkstellen 21 der Kettenglieder 2 ausgeschaltet ist. Um bei der Aufgabestation 6 jedweden Spalt auszuschalten, ist, wie aus Fig. 9 ersichtlich, das Förderband 1 entlang von konkaven, nach unten gewölbten Führungen geführt.

Ein dichtes Aneinanderliegen der aneinandergrenzenden Speicherplatten 18 kann auch dadurch erzielt werden, daß die Verbindung der Platten 3 mittels in Langlöchern 28 geführter federbelasteter Bolzen 29 gebildet ist, durch die benachbarte Platten 3 aneinandergepreßt werden (vgl. Fig. 7).

Wie aus Fig. 4 ersichtlich, ist die entlang des Untertrums 8 des Förderbandes 1 angeordnete Kühleinrichtung 12 von hintereinander angeordneten, kühlmitteldurchflossenen Kühlplatten gebildet, an deren glatten Oberseiten 30 die Speicherplatten 18 des Förderbandes 1 aufliegen. Die vom Heißgut erhitzte Speicherplatte 18 wird somit durch gleitende Berührung mit den Kühlplatten 12, die vorzugsweise aus Gußeisen gebildet sind, gekühlt. Die Rückkühlung erfolgt somit durch reine Wärmeleitung, d. h. ohne jedes Zwischenmedium.

Um einen guten Kontakt zwischen den Kühlplatten 12 und den Platten 3 des Förderbandes 1 sicherzustellen, sind die Kühlplatten am Fundament mittels Federn 31 abgestützt, wie dies in Fig. 9 dargestellt ist.

Die Funktion der Einrichtung ist folgende :

Das Heißgut, beispielsweise Hochofenschlacke, wird auf das Förderband 1 aufgegossen und erstarrt infolge der großen Wärmeaufnahme durch die Speicherplatten 18 in wenigen Sekunden. Die erstarrende Schlacke gibt ihre Wärme sowohl an die entlang des Obertrums 7 angeordneten Kühlelemente 11 als auch an die Speicherplatten 18 ab. Die Erwärmung der Speicherplatten hängt vom Verhältnis der Dicke der Speicherplatten zur Dicke der aufgebrachten Materialschicht ab. Vorzugsweise wird eine Erwärmung der Speicherplatten auf ca. 600 °C angestrebt.

Am Ende des Obertrums 7 ist die Schlacke bereits völlig durcherstarrt, durch Wärmespannungen äußerst brüchig und von der Aufgabestation 6, bei der sie etwa 1400 °C aufgewiesen hat, auf etwa 800 °C abgekühlt worden. Sie wird beim Umlenken des Förderbandes 1 beim zweiten Umlenkrad 5 selbsttätig abgeworfen und kann mittels eines Stachelbrechers 32 od. dgl. (Fig. 9) mit sehr geringer Antriebsleistung für weitere Zwecke unmittelbar weiter gebrochen werden.

Die vom Heißgut befreiten Speicherplatten 18 werden anschließend, so weit dies notwendig ist, mechanisch gereinigt, und eventuell mit Graphitpulver od. dgl. leicht geschmiert, so daß sie gut über die entlang des Untertrums 8 angeordneten Kühlplatten 12 gleiten können. Durch den Kontakt mit den Kühlplatten 12 werden die Speicherplatten 18 auf 400 bis 300 °C gekühlt.

Das Kühlmittel weist beim Eintritt in die Kühlplatten 12 des Untertrums 8 etwa 100 °C auf, verläßt die letzte Kühlplatte 12 des Untertrums 8 mit etwa 210 °C unter einem Druck von 20 bar und wird entlang des Obertrums 7 auf ca. 300 °C erwärmt.

Durch die Isolierschicht 19 der Platten 3 wird ein Wärmeverlust weitgehend vermieden. Der tragende Unterbau 24 der Platten 3 bleibt ohne wesentliche thermische Belastung und damit verzugsfrei. Der verzugsfreie Unterbau gewährleistet auch, daß die Speicherplatten 18 verzugsfrei bleiben, so daß deren guter Kontakt mit den Kühlplatten 12 gesichert ist.

In gleicher Weise, wie man mit der beschriebenen Vorrichtung die fühlbare Wärme von Hochofenschlacke gewinnen kann, ist dies auch bei anderen heißen Gütern, die in Hüttenbetrieben, wie Sinteranlagen od. dgl. anfallen, möglich.

Zur Gewinnung der fühlbaren Wärme von LD-Schlacke ist die Vorrichtung zweckmäßig, wie in den Fig. 2, 5 und 6 dargestellt, gestaltet. Zur Erstarrung von LD-Schlacke ist keine große Abkühlgeschwindigkeit erforderlich, so daß man auf Speicherplatten mit hoher Wärmekapazität verzichten kann und die Trägerschicht 18' aus relativ dünnem hitzebeständigem Blech ausbilden kann. Dieses hitzebeständige Blech 18' ist vorzugsweise gewellt gestaltet und weist eine Dicke von etwa 4 mm auf. In diesem Fall sind die Kühlelemente 12' der Kühlzone 10 entlang des Untertrums 8 etwa gleich ausgebildet wie die Kühlelemente 11 der Kühlzone 9 entlang des Obertrums 7, d. h. die von den dünnen Blechen 18' aufgenommene Wärme wird am Untertrum ebenfalls durch Strahlung an das Kühlmedium abgegeben, wobei wiederum ein Zwischenmedium zur Wärmeübertragung vermieden wird.

Um ein Zurückfließen des flüssigen Heißgutes beim Aufbringen auf das Förderband 1 zu vermeiden, ist das Förderband 1, wie in Fig. 9 dargestellt, vor der Aufgabestation 6 leicht abfallend und anschließend leicht steigend geführt.

Die erfindungsgemäße Vorrichtung kann auch zum Trockenlöschen von Koks eingesetzt werden, wobei die beim Trockenlöschen freiwerdende Wärme rückgewonnen werden kann. Eine dafür vorgesehene Ausführungsform ist in Fig. 10 dargestellt. Das Förderband 1 selbst und die Kühlzonen 9, 10 sind im wesentlichen gleich gestaltet, wie in Fig. 1 dargestellt. Der in einer dünnen Schicht, die etwa dem Durchmesser der größten Koksstücke 33 entspricht, auf das Förderband 1 aufgebrachte glühende Koks wird in die Kühlzone 9 entlang des Obertrums 7 transportiert. Während dieses Transportes strahlt der glühende Koks seine Wärme nach oben auf die Kühlelemente 11 und nach unten auf die Speicherplatten 18 des entsprechend den Fig. 3 und 4 gestalteten Förderbandes 1.

Damit es während des Transportes des Kokses am Obertrum 7 des Förderbandes 1 zu keiner Fortsetzung der Verbrennung oder Gasexplosion kommen kann, ist die Kühlzone 9 in einem Durchlauftunnel 34 untergebracht, in das Stickstoff oder ein anderes Gas mit analoger Funktion eingeleitet wird. Der Tunneleingang 35 und der Tunnelausgang 36 sind jeweils mittels Labyrinthdichtungen 37 so weit abgedichtet, daß mit einem minimalen Überdruck für den Stickstoff das Auslangen gefunden wird und die an den Tunnelöffnungen 35, 36 ausströmende Stickstoffmenge sehr gering bleibt.

Nach Austritt des Kokses aus dem Durchlauftunnel ist der Koks so weit abgekühlt, daß eine Verbrennung durch Berührung mit Luft nicht mehr eintreten kann. Sofern eine weitere Abkühlung noch aktuell ist, kann sie auf beliebige Weise mit Luft, einem weiteren Plattenband oder durch gekühlte Schwingförderrinnen erfolgen.

Der besondere Vorteil der erfindungsgemäßen Vorrichtung beim Trockenlöschen von Koks gegenüber dem Naßlöschen ist darin zu sehen, daß ein Großteil des Wärmeinhaltes des Kokses gewonnen werden kann, daß der Verlust von Koks durch Mitreißen feiner Koksteile durch Dampf vermieden wird und daß die Umwelt durch Koksstaub, Abgase und Abwasser nicht mehr belastet wird.

## Patentansprüche

1. Vorrichtung zur Gewinnung der fühlbaren Wärme von schüttfähigem Heißgut, insbesondere flüssiger Hochofenschlacke oder ungelöschtem Koks, mit einem über mindestens zwei Umlenkräder (4, 5) geführten, aus gelenkig verbundenen Platten (3) gebildeten endlosen Förderband (1), wobei das Obertrum (7) des Förderbandes (1) mit dem auf ihm aufgebrachten Heißgut und das leere Untertrum (8) durch je eine Kühlzone (9, 10) geführt sind, dadurch gekennzeichnet, daß die Platten (3) des Förderbandes (1) zumindest doppellagig ausgebildet sind und eine außenliegende, das Heißgut aufnehmende Trägerschicht (18, 18') sowie eine innenliegende Isolierschicht (19) aufweisen.

2. Vorrichtung nach Anspruch 1, dadurch gekennzeichnet, daß die Trägerschichten (18) als Speicherplatten ausgebildet sind.

3. Vorrichtung nach Anspruch 2, dadurch gekennzeichnet, daß entlang des Untertrums (8) eine mit den Speicherplatten (18) in Kontakt stehende Kühleinrichtung (12) angeordnet ist, die von einem vorzugsweise in einem thermodynamischen Kreisprozeß (13 bis 17) geführten Kühlmedium durchströmt ist.

4. Vorrichtung nach Anspruch 1 oder 2, dadurch gekennzeichnet, daß entlang des Untertrums (8) Kühlmittel durchflossene Kühlplatten (12') vorgesehen sind, die in geringem Abstand unterhalb des Untertrums (8) angeordnet sind.

5. Vorrichtung nach einem der Ansprüche 1 bis 4, dadurch gekennzeichnet, daß die Platten (3) an aneinander angelenkten Kettengliedern (2) befestigt sind.

6. Vorrichtung nach Anspruch 5, dadurch gekennzeichnet, daß die Platten (3) mittels an den Kettengliedern (2) angeordneter Führungsrollen (22) entlang von Führungsschienen (23) geführt sind.

7. Vorrichtung nach Anspruch 3, dadurch gekennzeichnet, daß die Kühleinrichtung (12) von hintereinander angeordneten hohlen Kühlplatten gebildet ist, wobei die Oberseiten (30) der Kühlplatten (12) als glatte, mit den Platten (3) des Förderbandes (1) in Kontakt gelangende Gleitflächen ausgebildet sind.

8. Vorrichtung nach Anspruch 7, dadurch gekennzeichnet, daß die Kühlplatten (12) am Fundament federnd (31) abgestützt sind.

9. Vorrichtung nach einem der Ansprüche 1 bis 8, dadurch gekennzeichnet, daß die Isolierschicht (19) als starrer Gitterrost ausgebildet ist.

10. Vorrichtung nach einem der Ansprüche 1 bis 9, dadurch gekennzeichnet, daß die Trägerschichten (18, 18') und die Isolierschichten (19) auf jeweils einem in sich starren Unterbau, der vorzugsweise als hohler Kasten (24) ausgebildet ist, befestigt sind.

11. Vorrichtung nach Anspruch 10, dadurch gekennzeichnet, daß die Befestigung der Trägerschichten (18, 18') und Isolierschichten (19) auf dem Unterbau mittels federnd vorgespannter schwenkbarer Schrauben (20) erfolgt.

12. Vorrichtung nach einem der Ansprüche 1 bis 11, dadurch gekennzeichnet, daß das Obertrum (7) zumindest bei der Aufgabestation (6) des Schüttgutes entlang einer konkaven, nach unten gewölbten Führung (23) geführt ist.

13. Vorrichtung nach einem der Ansprüche 1 bis 12, dadurch gekennzeichnet, daß die Verbindung der Platten (3) mittels in Langlöchern (28) geführter federbelasteter Bolzen (29), durch die benachbarte Platten (3) in eine aneinandergepreßte Position geführt sind, gebildet ist.

14. Vorrichtung nach einem der Ansprüche 1 bis 13, dadurch gekennzeichnet, daß das Obertrum (7) an der Aufgabestation (6) des Heißgutes leicht abfallend und erst daran anschließend steigend geführt ist.

15. Vorrichtung nach einem der Ansprüche 1 bis 14, dadurch gekennzeichnet, daß das der Aufgabestation (6) für das Heißgut benachbarte Umlenkrad (4) angetrieben ist.

16. Vorrichtung nach einem der Ansprüche 1 bis 15, dadurch gekennzeichnet, daß die Kühleinrichtung (12, 12') des Untertrums (8) mit mindestens einer als Wärmetauscher ausgebildeten und in der Kühlzone (9) des Obertrums (7) angeordneten Kühleinrichtung (11) in Serie geschaltet ist.

17. Vorrichtung nach einem der Ansprüche 2 bis 16, dadurch gekennzeichnet, daß an der Unterseite der Speicherplatte (18) eine die Fuge zur benachbarten Platte (3) überbrückende und unter die Speicherplatte (18) der benachbarten Platte (3) reichende Deckleiste (27) angeordnet ist.

18. Vorrichtung nach einem der Ansprüche 1 bis 17, dadurch gekennzeichnet, daß die Kühlzone (9) des Obertrums (7) mit einer Labyrinthdichtung (37) gegenüber dem Förderband (1) gedichtet ist und eine Speiseleitung für die Zufuhr von Inertgas in die Kühlzone (9) aufweist.

## Claims

1. Apparatus for recovering the sensible heat of dumpable hot stock, in particular molten blast furnace slag or unquenched coke, with a continuous conveying belt formed by articulately connected plates (3) guided about at least two deflection pulleys (4, 5), the carrier run (7) of the conveying belt (1) with the hot stock applied thereon and the empty lower run (8) being guided through one cooling zone (9, 10) each, characterised in that the plates (3) of the conveying belt (1) are designed with at least two layers and comprise an externally arranged carrier layer (18, 18') accommodating the hot stock as well as an internally arranged insulation layer (19).

2. Apparatus according to claim 1, characterised in that the carrier layers (18) are designed as storage plates.

3. Apparatus according to claim 2, characterised in that along the lower run (8) a cooling means (12) in contact with the storage plates (18) is arranged, which is passed by a coolant, preferably guided in a thermodynamic circulatory process (13 to 17).

4. Apparatus according to claim 1 or 2, characterised in that along the lower run (8) cooling plates (12') flown through by coolant are provided, which are arranged at a slight distance below the lower run (8).

5. Apparatus according to one of claims 1 to 4, characterised in that the plates (3) are fastened to articulately connected chain links (2).

6. Apparatus according to claim 5, characterised in that the plates (3) are guided along guide rails (23) by means of guide rollers (22) arranged on the chain links (2).

7. Apparatus according to claim 3, characterised in that the cooling means (12) is formed by consecutively arranged hollow cooling plates, the upper surfaces (30) of the cooling plates (12) being designed as smooth slide surfaces getting into contact with the plates (3) of the conveying belt (1).

8. Apparatus according to claim 7, characterised in that the cooling plates (12) are resiliently (31) supported on the base.

9. Apparatus according to one of claims 1 to 8, characterised in that the insulation layer (19) is designed as a rigid grid.

10. Apparatus according to one of claims 1 to 9, characterised in that the carrier layers (18, 18') and the insulation layers (19) are fastened to an inherently rigid substructure each, which substructure is preferably designed as a hollow box (24).

11. Apparatus according to claim 10, characterised in that fastening of the carrier layers (18, 18') and insulation layers (19) to the substructure is effected by means of resiliently biassed pivotable screws (20).

12. Apparatus according to one of claims 1 to 11, characterised in that the carrier run (7), at least adjacent the stock charging station (6), is guided along a concave, downwardly chased guide (23).

13. Apparatus according to one of claims 1 to 12, characterised in that the connection of the plates (3) is formed by spring-loaded pins (29) guided in longholes (28) through which pins neighbouring plates (3) are brought in a position pressed to each other.

14. Apparatus according to one of claims 1 to 13, characterised in that the carrier run (7) is guided so as to slightly go down at the hot stock charging station (6) and to rise only subsequent thereto.

15. Apparatus according to one of claims 1 to 14, characterised in that the deflection pulley (4) adjacent the hot stock charging station (6) is driven.

16. Apparatus according to one of claims 1 to 15, characterised in that the cooling means (12, 12') of the lower run (8) is connected in series to at least one cooling means (11) designed as a heat exchanger and arranged in the cooling zone (9) of the carrier run (7).

17. Apparatus according to one of claims 2 to 16, characterised in that a covering ledge (27) is arranged on the lower side of the storage plate (18) to bridge the joint relative to the neighbouring plate (3) and extending to below the storage plate (18) of the neighbouring plate (3).

18. Apparatus according to claims 1 to 17, characterised in that the cooling zone (9) of the carrier run (7) is sealed with a labyrinth seal (37) relative to the conveying belt (1), and is provided with a feed line for supplying inert gas into the cooling zone (9).

**Revendications**

1. Dispositif d'extraction de la chaleur sensible de produits chauds pouvant être versés, notamment laitier liquide de haut fourneau ou coke non éteint, comportant une bande transporteuse (1) sans fin passant sur au moins deux roues de renvoi (4, 5) et formée de plaques (3) reliées de manière articulée, le brin supérieur (7) de cette bande transporteuse (1), supportant le produit chaud qui y est déposé, et le brin inférieur (8) vide passant chacun par une zone de refroidissement (9, 10), caractérisé par le fait que les plaques (3) de la bande transporteuse (1) sont constituées avec au moins deux couches et présentent une couche porteuse extérieure (18, 18') recevant le produit chaud, et une couche isolante intérieure (19).

2. Dispositif selon revendication 1, caractérisé par le fait que les couches porteuses (18) sont réalisées sous forme de plaques-accumulateurs.

3. Dispositif selon revendication 2, caractérisé par le fait qu'un dispositif de refroidissement (12) se trouvant au contact des plaques-accumulateurs (18) est agencé le long du brin inférieur (8), ce dispositif de refroidissement étant parcouru par un fluide réfrigérant de préférence soumis à un cycle thermodynamique (13 à 17).

4. Dispositif selon revendication 1 ou 2, caractérisé par le fait que des plaques de refroidissement (12') traversées par du réfrigérant sont prévues le long du brin inférieur (8) en étant agencées à faible distance en dessous de celui-ci (8).

5. Dispositif selon l'une des revendications 1 à 4, caractérisé par le fait que les plaques (3) sont fixées à des éléments de chaîne (2) associés de manière articulée.

6. Dispositif selon revendication 5, caractérisé par le fait que les plaques (3) sont guidées le long de rails de guidage (23) au moyen de galets de guidage (22) agencés sur les éléments de chaîne (2).

7. Dispositif selon revendication 3, caractérisé par le fait que le dispositif de refroidissement (12) est constitué de plaques de refroidissement creuses agencées les unes à la suite des autres, les côtés supérieurs (30) de ces plaques de refroidissement (12) étant aménagés en surfaces de glissement lisses venant au contact des plaques (3) de la bande transporteuse (1).

8. Dispositif selon revendication 7, caractérisé par le fait que les plaques de refroidissement (12) sont supportées élastiquement (31) sur la fondation.

9. Dispositif selon l'une des revendications 1 à 8, caractérisé par le fait que la couche isolante (19) est réalisée sous la forme d'un treillis rigide.

10. Dispositif selon l'une des revendications 1 à 9, caractérisé par le fait que les couches porteuses (18, 18') et les couches isolantes (19) sont fixées chacune sur une substructure dotée de rigidité propre, réalisée de préférence sous forme de caissons creux (24).

11. Dispositif selon revendication 10, caractérisé par le fait que la fixation des couches porteuses (18, 18') et des couches isolantes (19) sur la substructure s'effectue au moyen de vis (20) capables de pivoter, précontraintes élastiquement.

12. Dispositif selon l'une des revendications 1 à 11, caractérisé par le fait que le brin supérieur (7) est guidé, au moins dans le poste de chargement (6) du produit apte à être versé, le long d'un guide (23) concave, cintré vers le bas.

13. Dispositif selon l'une des revendications 1 à 12, caractérisé par le fait que la liaison des plaques (3) est réalisée au moyen de boulons (29) chargés élastiquement et guidés dans des trous allongés (28), boulons par lesquels les plaques voisines (3) sont mises à une position de contact mutuel sous serrage.

14. Dispositif selon l'une des revendications 1 à 13, caractérisé par le fait que le brin supérieur (7) est en légère déclivité au poste de chargement (6) du produit chaud puis, seulement après cela, suit un tracé ascendant.

15. Dispositif selon l'une des revendications 1 à 14, caractérisé par le fait que la roue de renvoi (4) voisine du poste (6) de chargement du produit chaud est entraînée.

16. Dispositif selon l'une des revendications 1 à 15, caractérisé par le fait que le dispositif de refroidissement (12, 12') du brin inférieur (8) est branché en série avec au moins un dispositif de refroidissement (11) constitué en échangeur de chaleur et agencé dans la zone de refroidissement (9) du brin supérieur (7).

17. Dispositif selon l'une des revendications 2 à 16, caractérisé par le fait qu'un couvre-joint (27) est agencé sur le côté dessous de la plaque-accumulateur (18), ce couvre-joint pontant l'intervalle aboutissant à la plaque voisine (3) et allant en dessous de la plaque-accumulateur (18) de la plaque voisine (3).

18. Dispositif selon l'une des revendications 1 à 17, caractérisé par le fait que la zone de refroidissement (9) du brin supérieur (7) est conjuguée de manière étanche à la bande transporteuse (1) au moyen d'une étanchéité à labyrinthe (37) et présente une conduite d'alimentation pour l'amenée de gaz inerte dans la zone de refroidissement (9).

FIG. 1

FIG. 3

FIG. 4

FIG. 2

FIG. 5

FIG. 6

FIG. 8

FIG. 7

FIG. 9

FIG. 10